Europäisches Patentamt

European Patent Office

Office européen des brevets

(19)

(11) Veröffentlichungsnummer: **0 114 321 B1**

# (12) EUROPÄISCHE PATENTSCHRIFT

(45) Veröffentlichungstag der Patentschrift:
14.05.86

(21) Anmeldenummer: 83112708.9

(22) Anmeldetag: 16.12.83

(51) Int. Cl.⁴: **H 01 R 39/32, H 02 K 13/04**

(54) Kommutator für elektrische Maschinen.

(30) Priorität: 31.12.82 DE 3248726

(43) Veröffentlichungstag der Anmeldung:
01.08.84 Patentblatt 84/31

(45) Bekanntmachung des Hinweises auf die Patenterteilung:
14.05.86 Patentblatt 86/20

(84) Benannte Vertragsstaaten:
AT CH DE FR GB IT LI SE

(56) Entgegenhaltungen:
CH - A - 218 987
DE - A - 1 905 733
GB - A - 615 482
US - A - 2 269 154
US - A - 2 446 708

PATENTS ABSTRACTS OF JAPAN; Band 5, Nr.
205(E-88)(877), 25. Dezember 1981
PATENTS ABSTRACTS OF JAPAN, Band 1, Nr. 32, 29.
März 1977, Seite 678E76

(73) Patentinhaber: Siemens Aktiengesellschaft, Berlin und
München Wittelsbacherplatz 2, D-8000 München 2 (DE)

(72) Erfinder: Stralka, Herbert, Nürnberger Strasse 19,
D-8740 Bad Neustadt (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Kommutator für elektrische Maschinen, bei dem an jeder Kommutatorlamelle mehrere Anschlussdrähte im Abstand zueinander befestigt sind.

Ein solcher Kommutator ist durch die GB-A-552 332 bekannt. Bei diesem Kommutator sind an einer an den einzelnen Kommutatorlamellen vorgesehenen radial abstehenden Anschlussfahne zwei Leiter radial übereinander befestigt. Die elektrische Verbindung der Leiter mit den Anschlussfahnen erfolgt durch Löten.

Bekannt ist ferner, die Anschlussdrähte mittels Heissverstemmen an entsprechenden Anschlussstellen der Kommutatorlamellen zu befestigen (CH-A-218 987). Schwierigkeiten bestehen, wenn mehrere Anschlussdrähte an einer Kommutatorlamelle befestigt werden müssen. Es hat sich gezeigt, dass bei einem Anschluss von mehr als zwei Drähten nicht immer eine einwandfreie elektrische Verbindung zwischen allen Drähten und der Kommutatorlamelle zustandekommt.

Der Erfindung liegt die Aufgabe zugrunde, einen Kommutator so auszubilden, dass auch beim Anschluss von mehreren Drähten mittels Heissverstemmen stets eine gute elektrische Verbindung gegeben ist.

Die Lösung der gestellten Aufgabe gelingt gemäss dem Kennzeichen des Anspruches 1. Das Befestigen an axial voneinander beabstandeten Stellen hat den Vorteil, dass für jeden Befestigungsvorgang eine noch unversehrte Stelle an den Lamellenschlitzen für das Heissverstemmen zur Verfügung steht, so dass der für das Heissverstemmen notwendige Materialabtrag an den Schlitzwänden erfolgen kann. Da bei jedem Befestigungsvorgang nur ein oder zwei Drähte heissverstemmt werden, ist eine einwandfreie elektrische Kontaktverbindung gewährleistet.

Dadurch, dass die Schlitze in den Kommutatorlamellen durch eine oder mehrere Umfangsnuten in axiale Abschnitte unterteilt sind und in jedem der gebildeten Abschnitte eine Befestigungsstelle liegt, wird eine Aufweitung des der jeweiligen Befestigungsstelle benachbarten Bereiches der Lamellenschlitze vermieden. Durch eine solche Aufweitung kann die Materialabtragung gegebenenfalls verhindert und dadurch die Güte der Drahtbefestigung und der elektrischen Kontaktverbindung gemindert werden.

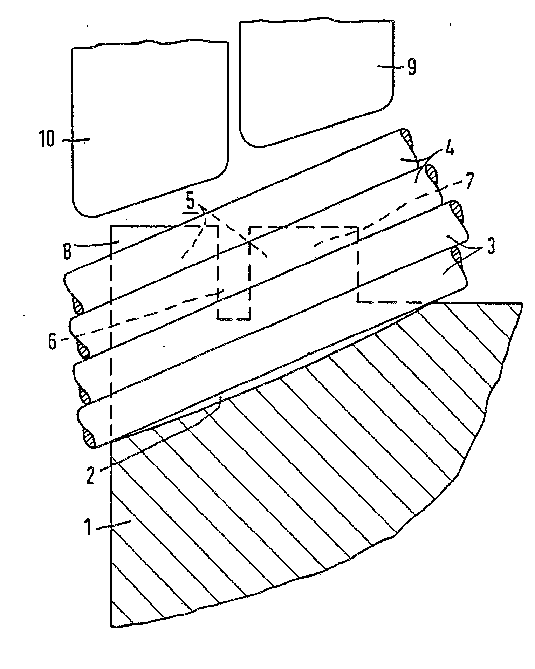

Anhand eines in der Zeichnung dargestellten Ausführungsbeispiels wird der Anmeldungsgegenstand nachfolgend näher beschrieben.

Mit 1 ist eine im Schnitt dargestellte Kommutatorlamelle bezeichnet. An dieser Kommutatorlamelle 1 ist ein Schlitz 2 ausgefräst, in den Anschlussdrähte 3 und 4 eingelegt sind. Im Bereich des Schlitzes 2 ist an der Kommutatorlamelle eine radial abstehende Anschlussfahne 5 ausgebildet, die durch eine Umfangsnut 6 in zwei Abschnitte 7 und 8 unterteilt ist. Über der Anschlussfahne 5 sind zwei Stempel 9 und 10 angedeutet, mit denen das Heissverstemmen ausgeführt wird. Es können zwei gesonderte, axial hintereinander angeordnete Stempel 9 und 10 vorgesehen werden oder es wird ein axial verschiebbarer Stempel angeordnet.

Beim Wickeln des Läufers der Maschine werden die Anschlussdrähte in den Schlitz 2 eingelegt. Sind beispielsweise zwei Anschlussdrähte 3 in den Schlitz eingelegt, dann werden diese Anschlussdrähte 3 mittels des Stempels 9 im Bereich des Abschnittes 7 der Anschlussfahne 5 heissverstemmt. Infolge der Umfangsnut 6 wird der Abschnitt 8 der Anschlussfahne 5 bei dem Heissverstemmen im Bereich des Abschnittes 7 der Anschlussfahne 5 keinerlei Belastungen unterworfen und bleibt unversehrt. Sind die weiteren Anschlussdrähte 4 in den Schlitz 2 eingelegt, dann werden diese im Bereich des Abschnittes 8 der Anschlussfahne 5 mittels des Stempels 10 ebenfalls heissverstemmt.

Infolge der Befestigung der Anschlussdrähte 3 und 4 in mehreren Schritten brauchen bei jedem Befestigungsvorgang nur wenige Drähte mit der Kommutatorlamelle 1 verbunden zu werden, so dass von daher schon eine gute Kontaktverbindung möglich wird. Wegen der axialen Beabstandung der einzelnen Befestigungsstellen bleiben bei den aufeinanderfolgenden Befestigungsvorgängen die für nachfolgende Befestigungsvorgänge vorgesehenen Befestitungsstellen unversehrt, so dass für alle Befestigungsstellen gleich gute Bedingungen vorliegen, so dass auch von daher die Gewähr für eine gute Kontaktverbindung und Befestigung der einzelnen Anschlussdrähte gegeben ist.

## Patentansprüche

1. Kommutator für elektrische Maschinen, bei dem an jeder Kommutatorlamelle (1) mehrere Anschlussdrähte (3, 4) im Abstand zueinander befestigt sind, und die Anschlussdrähte (3 und 4) in an den Kommutatorlamellen (1) ausgebildete Schlitze (2) eingelegt sind und verstemmt werden, dadurch gekennzeichnet, dass die Anschlussdrähte (3, 4) einzeln oder paarweise in mehreren Schritten nacheinander an axial beabstandeten Stellen in den Schlitzen (2) heissverstemmt sind, wobei die einzelnen Befestigungsstellen von einer weiter axial innen am Kommutator (1) liegenden Stelle ausgehend zum Kommutatorende hin angeordnet sind.

2. Kommutator nach Anspruch 1, dadurch gekennzeichnet, dass die Schlitze (2) in den Kommutatorlamellen (1) durch eine oder mehrere Umfangsnuten (6) in axiale Abschnitte (7 und 8) unterteilt sind und in jedem der gebildeten Abschnitte (7 und 8) eine Befestigungsstelle liegt.

## Claims

1. Commutator for electrical machines, in which several connecting wires (3, 4) spaced from each other are secured to each commutator segment (1), and the connecting wires (3 and 4) are laid in slots (2) formed in the commutator segments (1) and are peened-over, characterised in that the connecting wires (3, 4) are hot peened-over individually or in pairs in several steps one after the other at axially spaced points in the slots (2), whereby the individual securement points are arranged to extend from a point lying axially further inside the commutator (1) out towards the end of the commutator.

2. Commutator according to claim 1, characterised in that the slots (2) in the commutator segments (1) are sub-divided into axial portions (7 and 8) by one or several circumferential grooves (6) and in each of the portions formed (7 and 8) there is a securement point.

**Revendications**

1. Collecteur pour machines électriques, dans lequel plusieurs fils de raccordement (3, 4) sont fixés à distance les uns des autres sur chaque lamelle (1) du collecteur, et les fils de raccordement (3 et 4) sont insérés et matés dans des fentes (2) ménagées dans les lamelles (1) du collecteur, caractérisé par le fait que les fils de raccordement (3, 4) sont matés à chaud individuellement ou par couples, successivement selon plusieurs phases opératoires, au niveau d'emplacements distants axialement dans les fentes (2), les différents emplacements de fixation étant disposés à partir d'un emplacement situé axialement plus à l'intérieur sur le collecteur (1) jusqu'à l'extrémité du collecteur.

2. Collecteur suivant la revendication 1, caractérisé par le fait que les fentes (2) sont subdivisées en éléments axiaux (7 et 8) par une ou plusieurs gorges périphériques (6), dans les lamelles (1) du collecteur et qu'un emplacement de fixation est situé dans chacun des éléments (7 et 8) formés.